(19) Europäisches Patentamt
European Patent Office
Office européen des brevets

(11) **EP 3 566 791 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(51) Int Cl.:
***B21B 45/02*** *(2006.01)*

(21) Anmeldenummer: **19171537.4**

(22) Anmeldetag: **29.04.2019**

(54) **VERFAHREN UND SYSTEM ZUM ERFASSEN DER OBERFLÄCHENBELEGUNG EINER BESCHICHTUNG AUF EINER OBERFLÄCHE EINES BANDFÖRMIGEN PRÜFLINGS**

METHOD AND SYSTEM FOR DETECTING THE SURFACE ALLOCATION OF A COATING ON A SURFACE OF A SHEET-SHAPED TEST SPECIMEN

PROCÉDÉ ET SYSTÈME DE DÉTECTION DU RECOUVREMENT SUPERFICIEL D'UN REVÊTEMENT SUR UNE SURFACE D'UN OBJET D'ESSAI EN FORME DE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2018 DE 102018110931**

(43) Veröffentlichungstag der Anmeldung:
**13.11.2019 Patentblatt 2019/46**

(73) Patentinhaber: **FRAUNHOFER-GESELLSCHAFT zur Förderung der angewandten Forschung e.V. 80686 München (DE)**

(72) Erfinder: **Brandenburg, Albrecht 79104 Freiburg (DE)**

(74) Vertreter: **WSL Patentanwälte Partnerschaft mbB Kaiser-Friedrich-Ring 98 65185 Wiesbaden (DE)**

(56) Entgegenhaltungen:
WO-A1-00/04340      WO-A1-01/92820
WO-A1-2010/046243   WO-A1-2017/220677
DE-A1-102015 007 054   JP-A- H03 252 512
KR-B1- 100 785 244

**Beschreibung**

Die vorliegende Erfindung betrifft ein Verfahren zum Erfassen der Oberflächenbelegung einer Beschichtung auf einer Oberfläche eines bandförmigen Prüflings mit den Schritten, Bewegen des bandförmigen Prüflings in einer Vorschubrichtung und zeilenweises Erfassen eines Maßes für die Oberflächenbelegung der Beschichtung mit einem ersten Messverfahren, welches die Schritte umfasst, Beleuchten der Oberfläche des Prüflings mit elektromagnetischer Strahlung an einer Mehrzahl von Orten in einer sich im Wesentlichen senkrecht zu der Vorschubrichtung erstreckenden Zeile, Messen jeweils einer Intensität einer von der Beschichtung an den Orten in der Zeile reflektierten, zurückgestreuten oder abgestrahlten elektromagnetischen Strahlung mit einem Detektor und Bestimmen eines Maßes für die Oberflächenbelegung der Beschichtung an den Orten in der Zeile aus der von dem Detektor erfassten Intensität.

Die vorliegende Erfindung betrifft darüber hinaus ein System zum Erfassen der Oberflächenbelegung einer Beschichtung auf einer Oberfläche eines bandförmigen Prüflings mit einer ersten Messeinrichtung zum Erfassen eines Maßes für die Oberflächenbelegung der Beschichtung mit einem ersten Messverfahren, wobei die Messeinrichtung umfasst, eine Lichtquelle zum Erzeugen von elektromagnetischer Strahlung, eine Beleuchtungseinrichtung, die derart eingerichtet und angeordnet ist, dass mit der Beleuchtungseinrichtung die Oberfläche des Prüflings mit der elektromagnetischen Strahlung in Form einer sich im Wesentlichen senkrecht zu einer Vorschubrichtung des Prüflings erstreckenden Zeile beleuchtbar ist, einem Detektor, der so eingerichtet und angeordnet ist, dass mit dem Detektor eine Intensität einer von der Beschichtung an den Orten in der Zeile reflektierten, gestreuten oder abgestrahlten elektromagnetischen Strahlung messbar ist, und eine Auswerteeinrichtung, wobei die Auswerteeinrichtung derart wirksam mit dem Detektor verbunden ist, dass ein Messsignal von dem Detektor mit der Auswerteeinrichtung auswertbar ist, und wobei die Auswerteeinrichtung derart eingerichtet ist, dass mit der Auswerteeinrichtung ein Maß für die Oberflächenbelegung der Beschichtung an den Orten in der Zeile aus der Intensität bestimmbar ist.

Bandförmige Materialien, beispielsweise Blechbänder aus Stahl oder Aluminium, werden aus verschiedenen Gründen für die Verarbeitung auf ihren Oberflächen mit einer Beschichtung versehen. Beispielsweise werden Blechbänder, die durch Pressen in einem Presswerkzeug, beispielsweise zu Karosserieteilen, weiterverarbeitet werden sollen, mit einem Umformöl beschichtet, welches die Umformung in dem Presswerkzeug durch Reduzieren der Reibung zwischen Werkstück und Werkzeug, erleichtert. Der Auftrag des Öls kann einerseits in einem Ablauf mit dem Schneiden des Bleches in Einzelteile, sogenannte Platinen, und dem Pressvorgang erfolgen. Andererseits kann es sein, dass eine üblicherweise durchgeführte Vorbeölung der Bänder durch den Lieferanten des Rohmaterials, der sogenannten Coils, d.h. des aufgewickelten Blechmaterials, bereits für die Umformung geeignet ist. Dabei ist es wichtig, dass die Beschichtung die Oberfläche vollständig bedeckt und eine über die Oberfläche gleichmäßige gemittelte Oberflächenbelegung aufweist. Dies ist deshalb schwierig zu gewährleisten, da die Schichtdicke typischerweise sehr gering ist, beispielsweise im Durchschnitt über die gesamte Fläche nur 1 μm beträgt.

Die bandförmigen Materialien weisen eine erhebliche Länge auf. Daher muss die Beschichtung mit hoher Geschwindigkeit erfolgen. Dazu wird das bandförmige Material in der Beschichtungsanlage mit hoher Geschwindigkeit unter der Auftragseinrichtung hindurchbewegt. Will man die Qualität der Beschichtung gewährleisten, so muss an dem durchlaufenden Band kontinuierlich und zeitlich nach dem Aufbringen der Beschichtung oder - im Fall von vorbeschichteten Bändern - nach dem Abwickeln des Coils, deren Qualität erfasst werden. Bewegt sich das bandförmige Material mit hoher Geschwindigkeit, so muss auch eine vollständige Überwachung der beschichteten Oberfläche sehr schnell erfolgen.

Um die Qualität der Beschichtung eines derartigen bandförmigen Materials zu gewährleisten, ist es aus dem Stand der Technik bekannt, die Oberfläche mit einem bildgebenden Fluoreszenz-Laserscanner zu erfassen. Dabei wird die Oberfläche des bandförmigen Materials zeilenweise mit elektromagnetischer Strahlung aus einem Laser im ultravioletten oder kurzwelligen sichtbaren Spektralbereich beleuchtet. Die Beschichtung absorbiert durch die elektromagnetische Strahlung des Lasers. Die daraufhin von der Beschichtung generierte Lumineszenzstrahlung wird wellenlängenaufgelöst erfasst. Aus dem Spektrum der Lumineszenzstrahlung lässt sich unmittelbar auf die Oberflächenbelegung der Beschichtung schließen. Tastet man die Oberfläche des bandförmigen Materials mit der Beschichtung zeilenweise in hoher Geschwindigkeit und hoher Zeilenfrequenz ab, so bewirkt der Vorschub, den das bandförmige Material aufgrund der schnell erfolgenden Beschichtung ohnehin hat, dass die gesamte Oberfläche des bandförmigen Materials erfasst wird und ein Bild der Schichtdicke des Materials über die gesamte Oberfläche erstellt werden kann.

Allerdings hat sich herausgestellt, dass eine bildgebende Erfassung der Oberfläche eines derartigen bandförmigen Materials nur dann zuverlässige Ergebnisse bezüglich der Oberflächenbelegung der Ölauflage liefert, wenn sich die Zusammensetzung der Beschichtung des Materials an jedem Ort auf der Oberfläche bekannt ist.

Aus der DE 10 2015 007 054 A1 ist ein Verfahren zur Bestimmung der Dicke organischer Schichten auf rauen Oberflächen bekannt, bei dem die Oberfläche mit Strahlung mit Infrarotanteil bestrahlt wird und die reflektierte Strahlung in Wellenlängenbereichen gemessen wird, die für Grundschwingungen der in der Beschichtung vorkommenden Moleküle charakteristisch sind und der selbe Messfleck mit UV-Licht geeigneter Wellenlänge zur Fluoreszenz angeregt wird und diese Fluoreszenz quantitativ erfasst wird.

Es ist daher Aufgabe der vorliegenden Erfindung, ein Verfahren sowie ein System zum Erfassen der räumlichen Verteilung der Oberflächenbelegung einer Beschichtung in zwei Dimensionen auf einer Oberfläche eines bandförmigen Prüflings bereitzustellen, welche eine quantitative Bestimmung der Oberflächenbelegung der Beschichtung auch dann ermöglichen, wenn die Materialzusammensetzung der Beschichtung nicht während der gesamten Erfassung bekannt ist.

Zur Lösung dieser Aufgabe wird erfindungsgemäß vorgeschlagen, das eingangs genannte Verfahren dahingehend auszugestalten, dass es zusätzlich die Schritte aufweist, Ausführen einer Kalibrierungsmessung an einem Ort der Zeile mit einem von dem ersten Messverfahren verschiedenen zweiten Messverfahren, wobei das zweite Messverfahren derart ausgestaltet ist, dass es ein Maß für die Oberflächenbelegung der Beschichtung an dem Ort in der Zeile erfasst und Kalibrieren des durch das erste Messverfahren bestimmten Maßes für die Oberflächenbelegung der Beschichtung auf der Grundlage des von dem zweiten Messverfahren erfassten Maßes für die Oberflächenbelegung der Beschichtung, wobei die Kalibrierungsmessung mit dem zweiten Messverfahren an genau einem oder an einer Mehrzahl von Orten in der Zeile ausgeführt wird, wobei die Anzahl der Orte, an denen die Kalibrierungsmessung ausgeführt wird, kleiner ist als die Anzahl der Orte, an denen die Messung mit dem ersten Messverfahren ausgeführt wird.

Der vorliegenden Erfindung liegt die Idee zu Grunde, dass bei einem in einer Vorschubrichtung bewegten bandförmigen Prüfling das Material der Beschichtung in eine Richtung senkrecht zur Vorschubrichtung, diese Richtung könnte auch als Zeilenrichtung bezeichnet werden, im Wesentlichen konstant bleibt, während eine Änderung der Materialzusammensetzung der Beschichtung in einer Richtung parallel zur Vorschubrichtung auftritt. Eine solche Änderung der Materialzusammensetzung tritt z.B. bei einem Wechsel des Gebindes für das aufzubringende Material der Beschichtung auf. Ist man nun erfindungsgemäß in der Lage, die Oberflächenbelegung der Beschichtung unabhängig vom Material der Beschichtung an einem Ort in der Zeile mit dem zweiten Messverfahren zu erfassen, so kann die so erfasste Oberflächenbelegung zum Kalibrieren der schnellen zeilenförmigen Messung mit dem ersten Messverfahren dienen. In einer Ausführungsform bedeutet ein Kalibrieren des durch das erste Messverfahren bestimmten Maßes für die Oberflächenbelegung der Beschichtung auf der Grundlage des von dem zweiten Messverfahren erfassten Maßes für die Oberflächenbelegung der Beschichtung, dass das durch das erste Messverfahren bestimmte Maß für die Oberflächenbelegung der Beschichtung mit dem von dem zweiten Messverfahren erfassten Maß für die Oberflächenbelegung der Beschichtung kalibriert wird.

Das erfindungsgemäße Verfahren ermöglicht es, die Vollständigkeit der Belegung der Oberfläche des Prüflings mit der Beschichtung festzustellen, da mit dem ersten Messverfahren im Wesentlichen eine Erfassung der gesamten beschichteten Oberfläche des bandförmigen Prüflings gewährleistet ist.

Mit Beschichtung ist hier sehr allgemein eine Belegung einer Oberfläche mit einem festen oder flüssigen Material gemeint. Im Sinne der vorliegenden Anmeldung wird unter der Oberflächenbelegung der Oberfläche des Prüflings mit der Beschichtung beispielsweise die Masse (z.B. ausgedrückt in Masse pro Fläche) oder die Dicke der Beschichtung bezogen auf die Fläche des Orts, von welchem die elektromagnetische Strahlung mit dem ersten Messverfahren erfasst wird, verstanden. Dies ist insofern von Bedeutung, da die Beschichtung innerhalb des Orts lokal durchaus eine variierende Dicke aufweisen kann. So zeigt sich beispielsweise, dass der Auftrag eines Umformöls auf ein Blech eher die Gestalt einer Aneinanderreihung einer Vielzahl von sich überschneidenden Tröpfchen hat als die eines Films mit konstanter Schichtdicke.

Das Ziel der beschriebenen Messung kann die Bestimmung einer über eine bestimmte Fläche gemittelten Oberflächenbelegung sein, wie beispielsweise im Fall der Belegung von Bandmaterial mit einem Umformöl. Hier wird typischerweise über Flächen in der Größenordnung von $cm^2$ gemittelt werden. In anderen Fällen kann aber auch die hohe Ortsauflösung eines Messverfahrens wie beispielsweise des Laserscanners für die Messaufgabe entscheidend sein. Das gilt z.B. dann, wenn kleine Defekte in Beschichtungen erfasst werden sollen.

In einer Ausführungsform des erfindungsgemäßen Verfahrens wird daher mit dem ersten Messverfahren ein Maß für die Dicke oder für die mittlere Dicke der Beschichtung an den Orten in der Zeile aus der von dem Detektor erfassten Intensität bestimmt. Es versteht sich, dass in einer solchen Ausführungsform mit dem zweiten Messverfahren ein Maß für die Dicke oder für die mittlere Dicke der Beschichtung an einem Ort in der Zeile erfasst wird.

In einer alternativen Ausführungsform des erfindungsgemäßen Verfahrens wird mit dem ersten Messverfahren ein Maß für die Masse oder für die mittlere Masse, der Beschichtung an den Orten in der Zeile aus der von dem Detektor erfassten Intensität bestimmt. Es versteht sich, dass in einer solchen Ausführungsform mit dem zweiten Messverfahren ein Maß für die Masse oder für die mittlere Masse, der Beschichtung an einem Ort in der Zeile erfasst wird.

Dabei wird in dem erfindungsgemäßen Verfahren mit dem ersten Messverfahren pro Zeiteinheit eine größere Anzahl von Messungen durchgeführt als mit dem zweiten Messverfahren, wobei aus der Kombination des ersten und des zweiten Messverfahrens eine räumliche Verteilung der absoluten Oberflächenbelegung der Beschichtung auf der Oberfläche des Prüflings bestimmt wird, indem mit dem ersten Messverfahren jeweils ein relatives, d.h. nicht kalibriertes, Maß für die Oberflächenbelegung der Beschichtung an einer ersten Anzahl von Orten auf der Oberfläche des Prüflings bestimmt wird, während mit dem zweiten Messverfahren jeweils die absolute, d.h. kalibrierte, Oberflächenbelegung der Beschichtung an einer zweiten Anzahl von Orten auf der Oberfläche des Prüflings erfasst wird, wobei die erste Anzahl größer ist als die zweite Anzahl.

Darüber hinaus wird in einer Ausführungsform der Erfindung aus der mit dem ersten Messverfahren gemessenen Intensität und dem mit dem zweiten Messverfahren erfassten Maß für die Oberflächenbelegung der Beschichtung eine Information über die Zusammensetzung der Beschichtung an den mit dem ersten Messverfahren gemessenen Orten abgeleitet

Bei dem ersten Messverfahren handelt es sich um ein Verfahren, welches in der Lage ist, mit einer hohen Erfassungsgeschwindigkeit Punkte oder Orte entlang einer Zeile senkrecht zur Vorschubrichtung zu erfassen. Dabei ist es für die vorliegende Erfindung unerheblich, ob die Erfassung der einzelnen Punkte seriell, d.h. zeitlich nacheinander, erfolgt oder gleichzeitig.

Daher ist in einer Ausführungsform das erste Messverfahren ein Abtastverfahren, wobei zeitlich nacheinander die Mehrzahl von Orten in der Zeile beleuchtet und die Intensität der von diesen Orten reflektierten oder gestreuten oder abgestrahlte elektromagnetische Strahlung gemessen wird. Zu diesem Zweck wird die von einer Lichtquelle, vorzugweise von einem einzigen Laser, erzeugte elektromagnetische Strahlung mit Hilfe von Prismen oder Spiegeln so abgelenkt, dass sie zeitlich nacheinander die einzelnen Orte auf dem Prüfling überstreicht und beleuchtet.

In einer alternativen Ausführungsform erfolgt die Beleuchtung über die gesamte Breite des Prüflings, d.h. entlang der gesamten Zeile, gleichzeitig und auch der Detektor erfasst die elektromagnetische Strahlung von allen Orten gleichzeitig. In einer Ausführungsform der Erfindung ist der Detektor dann ein Zeilendetektor mit einer Mehrzahl von zeilenförmig angeordneten einzelnen Sensoren. In einer solchen Ausführungsform umfasst die Lichtquelle vorzugsweise eine zeilenförmige Anordnung von elektromagnetische Strahlung generierenden Elementen, beispielsweise eine Zeile von Leuchtdioden.

Die erforderliche Geschwindigkeit der Messung mit dem ersten Messverfahren und/oder mit dem zweiten Messverfahren wird dabei maßgeblich von der Geschwindigkeit des Bandes bestimmt, die typischerweise in einem Bereich von 0,1 m/s bis 3 m/s liegt.

Grundsätzlich sind als erstes Messverfahren eine Reihe ganz unterschiedlicher Messverfahren geeignet, welche alle die Oberfläche und damit die Beschichtung auf der Oberfläche mit elektromagnetischer Strahlung beleuchten und dann die von der Beschichtung an den beleuchteten Orten reflektierte, zurückgestreute oder abgestrahlte, d.h. dort generierte, elektromagnetische Strahlung ortsaufgelöst erfassen. Insbesondere aber ist das erste Messverfahren ausgewählt aus einer Streulichtmessung, einer Farbmessung, einer Messung der spektralen Reflektivität, einer Glanzmessung und einer Lumineszenzmessung.

In einer Ausführungsform bei welcher das erste Messverfahren eine Lumineszenzmessung, insbesondere aber eine Laser-Lumineszenzmessung, ist, wird jeweils die Intensität in Abhängigkeit von der Wellenlänge einer von der Beschichtung an den Orten in der Zeile abgestrahlten Lumineszenzstrahlung mit dem Detektor gemessen und das Maß für die Oberflächenbelegung der Beschichtung an den Orten in der Zeile wird aus der von dem Detektor erfassten Intensität in Abhängigkeit von der Wellenlänge bestimmt.

In einer Ausführungsform der Erfindung hat die elektromagnetische Strahlung für die Beleuchtung des Prüflings eine Wellenlänge in einem Bereich von 250 nm bis 500 nm, d.h. die Strahlung liegt im ultravioletten oder kurzwelligen sichtbaren Wellenlängenbereich. In diesem Frequenzbereich zeigen viele Umformöle eine starke Fluoreszenzaktivität. Gleiches gilt für die Polymere, welche in einer Ausführungsform als Träger für eine Korrosionsschutzbeschichtung infrage kommen.

Für das zum Kalibrieren des ersten Messverfahrens verwendete zweite Messverfahren ist es wichtig, dass dieses eine quantitative Analyse der Oberflächenbelegung der Beschichtung ermöglicht, währenddessen die Messgeschwindigkeit insofern keine Rolle spielt, da die Kalibrierungsmessung an weniger Orten in der Zeile ausgeführt werden kann als die vollständige Erfassung der Oberfläche mit Hilfe des ersten Messverfahrens. Das zweite Messverfahren kann daher eines sein, das für das Erfassen des Maßes der Oberflächenbelegung der Beschichtung an einem Ort der Oberfläche eine deutlich längere Zeit benötigt als das erste Messverfahren und das daher kein schnelles Abrastern der Oberfläche ermöglicht. Eine parallele Anordnung einer Mehrzahl von Messeinrichtungen, die nach dem zweiten Messverfahren arbeiten und die anstelle des erfindungsgemäßen Verfahrens und des erfindungsgemäßen Systems die zugrundeliegende Aufgabe lösen würden, ist in der Regel aus technischen und Kostengrunden ausgeschlossen.

Die Kalibrierungsmessung mit dem zweiten Messverfahren wird an genau einem einzigen Ort in der Zeile, vorzugsweise an einem Ort, an welchem auch eine Messung mit dem Messverfahren erfolgt, oder an einer Mehrzahl von Orten in der Zeile ausgeführt, wobei die Anzahl der Orte, an denen die Kalibrierungsmessung ausgeführt wird, kleiner ist als die Anzahl der Orte, an denen die Messung mit dem ersten Messverfahren ausgeführt wird.

Ist die Messgeschwindigkeit des zweiten Messverfahrens sehr gering, so kann in einer Ausführungsform eine einzige Kalibrierungsmessung mit dem zweiten Messverfahren an einem einzigen Ort auf der Oberfläche zur Kalibrierung der Bestimmung des Maßes für die Oberflächenbelegung der Beschichtung an einer Mehrzahl von Orten in einer Mehrzahl von Zeilen mit dem ersten Messverfahren verwendet werden. Letzteres ist möglich, wenn man z.B. aus der Kenntnis des Beschichtungsverfahrens heraus ausschließen kann, dass sich die Zusammensetzung der Beschichtung in Vorschubrichtung über eine Strecke ändert, die kleiner ist als der minimale Abstand zweier Orte auf der Oberfläche in Vorschubrichtung, die mit dem zweiten Messverfahren erfasst werden können.

Die Signalverarbeitung beginnt in einer Ausführungsform mit einer Vorverarbeitung der Rohsignale des ersten Messverfahrens und des zweiten Messverfahrens. Dazu kann z.B. der Abzug eines Untergrundes, eine Normierung auf ein Referenzobjekt oder eine Linearisierung der Rohsignale gehören.

Die ggf. vorverarbeiteten Signale der Detektoren werden in einer Ausführungsform im Hinblick auf die Oberflächenbelegung der Beschichtung kalibriert. Die Kalibrierung des zweiten Messverfahrens bzw. der zweiten Messeinrichtung auf die Oberflächenbelegung kann z.B. vorab bei der Einrichtung des Verfahrens oder Systems oder bei einem Service-Einsatz erfolgen. In die Kalibrierung des zweiten Messverfahrensgehen z.B. Eigenschaften der Oberfläche des Blechbandes (Rauheit, Material, gezielte Strukturierung der Oberfläche) ein. Auch eine Kalibrierung auf eine Materialgruppe der Beschichtung kann Gegenstand einer Kalibrierung des zweiten Messverfahrens sein. Die Kalibrierung des zweiten Messverfahrens muss jedoch unabhängig von den auftretenden Materialvariationen des Beschichtungsmaterials sein. Im einfachsten Fall ist die Kalibrierung des zweiten Messverfahrens eine lineare Operation, in komplizierten Fällen können komplexere Zusammenhänge auftreten.

Nennt man $S_2$ das Signal des zweiten Messverfahrens, ggf. nach der Signalvorverarbeitung, und $k_{2d}$ den Kalibrierfaktor des zweiten Messverfahrens im Hinblick auf die Oberflächenbelegung d, so kann man eine lineare Kalibrierung folgendermaßen durchführen:

$$k_{2d} = S_2(x_2,y) \, / \, d(x_2,y).$$

Die Raumkoordinaten x und y sind an dem bewegten Blech definiert. Die Koordinate y bezeichnet die Vorschubrichtung, x die Richtung senkrecht dazu. Es wird angenommen, dass das Messgerät 2 fest an der Position $x_2$ steht. Der Kalibrierfaktor $k_{2d}$ ist unabhängig von der Position auf dem Blech. Die Kalibrierung des ersten Messverfahrens bzw. der ersten Messeinrichtung erfolgt im einfachsten Fall ebenfalls linear entsprechend folgender Gleichung:

$$k_{12}(y) = S_1(x_2,y) \, / \, S_2(x_2,y).$$

Der Kalibrierfaktor $k_{12}$, mit dem das erste Messverfahren entsprechend den Ergebnissen des zweiten Messverfahrens kalibriert wird, kann wegen der möglichen Materialveränderung der Beschichtung in der Richtung des Vorschubs und der Abhängigkeit des Signals $S_2$ von der Materialzusammensetzung von y abhängen. Diese dynamische Kalibrierung wird während des Betriebs immer wieder neu bestimmt. Die Bestimmung von $k_{12}$ kann nur an den Positionen mit $x = x_2$ erfolgen, da nur hier die Messung mit dem zweiten Messverfahren ausgeführt wird. Da man davon ausgehen kann, dass sich in der Richtung senkrecht zu der Vorschubrichtung des Prüflings die Kalibrierung nicht ändert, ist der Kalibrierfaktor $k_{12}(y)$ aber auf alle anderen Positionen x senkrecht zum Vorschub anwendbar. Ausgehend von den beiden obigen Gleichungen kann man mit den Signalen der beiden Messverfahren die Oberflächenbelegung als Funktion der Koordinaten x und y folgendermaßen bestimmen:

$$d(x,y) = S_1(x,y) \, / \, (k_{12}(y) \, * \, k_{2d}),$$

wobei für jeden Wert von y die Größe von $k_{12}(y)$ entsprechend der obigen Formel aus den Signalen $S_1(x_2,y)$ und $S_2(x_2,y)$ neu bestimmt wird.

Aus dem Vergleich der Messdaten des ersten Messverfahrens und des zweiten Messverfahrens können in einer weiteren Ausführungsform zusätzliche Informationen über die Beschichtung erhalten werden. Da die mit dem zweiten Messverfahren gewonnenen Messwerte materialunabhängig sind, mit dem ersten Messverfahren gewonnenen Messwerde aber materialabhängig sind, ist aus dem Vergleich, d.h. aus der Kalibrierung $k_{12}$ für das erste Messverfahren für jeden Punkt y in Vorschubrichtung ein Rückschluss auf das verwendete Beschichtungsmaterial oder eine Veränderung der Zusammensetzung einer Materialmischung möglich. Auf diese Weise kann das Verfahren oder das System in einer Ausführungsform eine Beschichtung mit einem falschen Material erkennen und ggf. gegebenenfalls eine Fehlermeldung an eine Steuerung der Beschichtungsanlage weitergeben.

Ein geeignetes Verfahren für das zweite Messverfahren ist eine Absorptionsmessung im infraroten Spektralbereich, eine Fluoreszenzmessung im Röntgenbereich oder eine laserinduzierte Plasmaspektroskopiemessung. Diese Messverfahren können so kalibriert werden, dass die Oberflächenbelegung der Beschichtung auch bei Veränderungen der Zusammensetzung des Beschichtungsmaterials richtig erfasst wird.

Ändert sich das Material der Beschichtung, so sorgt die Kalibrierung des ersten Messverfahrens durch die bzw. auf Grundlage der Ergebnisse des zweiten Messverfahrens dafür, dass die Ergebnisse des ersten Messverfahrens richtig kalibriert werden und die Oberflächenbelegung der Beschichtung damit in hoher Ortsauflösung richtig bestimmt werden kann.

In einer Ausführungsform der Erfindung ist der bandförmige Prüfling ein Blechband aus Metall, vorzugsweise aus Stahl oder aus Aluminium.

In einer weiteren Ausführungsform ist die Beschichtung ein Umformöl. Dabei ist die Erfindung insbesondere geeignet, die Oberflächenbelegung eines Umformöls auf einem Stahlblech zu bestimmen. In diesem Fall wird die Eigenfluoreszenz des Umformöls verwendet, um mit dem ersten Messverfahren mit einer schnellen, möglichst flächendeckenden Abtastung ein möglichst hoch aufgelöstes Bild der Ölverteilung zu erhalten. Die oben genannten Änderungen der Kalibrierung des Fluoreszenzsignales rühren daher, dass sich bei dem Auftragen des Öls die Zusammensetzung sich ändern kann oder die Zusammensetzung anders ist als spezifiziert. Außerdem kann es passieren, dass nominell gleiche Öle eines Herstellers verschiedene Fluoreszenzeigenschaften haben, weil verschiedene Chargen einer Ölsorte unter Umständen leicht verschiedene Zusammensetzung haben. Eine Änderung der Zusammensetzung des Öls tritt allerdings immer nur in Vorschubrichtung auf. An einer Bandposition in der Richtung senkrecht zu der Vorschubrichtung ist sie hingegen nicht möglich, da typischerweise Öl aus demselben Reservoir gleichzeitig aus mehreren zeilenförmig senkrecht zur Vorschubrichtung nebeneinander angeordneten Düsen aufgesprüht oder parallel mit Walzen aufgetragen wird. Das zweite Messverfahren ist für diese Anwendung typischerweise eine Infrarot-Absorptionsmessung bei Wellenlängen in einem Bereich von 2,5 $\mu$m bis 3,5 $\mu$m. In diesem Wellenlängenbereich absorbieren organische Materialien durch Streckschwingungen der Kohlenstoff-Wasserstoff-Bindung. Da die Kohlenstoff-Wasserstoff Bindung in allen organischen Stoffen sehr stark vertreten ist und in Ölen immer in ähnlicher Häufigkeit auftritt, kann man mit diesem Verfahren unabhängig von der Ölsorte und der Ölcharge kalibrieren.

In einer alternativen Ausführungsform ist die Beschichtung eine Korrosionsschutzbeschichtung, vorzugsweise eine Polymersuspension, mit Zirkon und/oder Titan. Derartige Korrosionsschutzbeschichtungen werden insbesondere zum Schutz von Aluminiumblechen verwendet. In einer Ausführungsform werden die Titan- und/oder Zirkonverbindungen in einer Polymersuspension auf das Blech aufgetragen. Ein solcher Auftrag kann unter anderem mit Rollen erfolgen. Da die dabei entstehenden Oberflächenbelegungen der Beschichtung nur sehr gering sind, insbesondere aber die relevanten Stoffe (Titan, Zirkon) in extrem geringer Flächenbelegung an der Oberfläche aufgebracht werden, ist die Messung während der Fertigung äußerst schwierig.

Das auf der Oberfläche abgeschiedene Polymer kann dennoch mit dem ersten Messverfahren, nämlich dem Fluoreszenz-Scan, erfasst werden. Relevant für den Effekt des Korrosionsschutzes sind jedoch die auf diese Weise nicht detektierbaren Zirkon- und Titan-Anteile der Beschichtung. Die Anwendung des Fluoreszenz-Scans ist also nur möglich, wenn die Konzentration der Titan- und/oder Zirkonverbindungen in dem Polymer immer bekannt ist und sich idealerweise nicht ändert.

Dies ist jedoch nicht immer der Fall. Während eines sehr lange laufenden Beschichtungsprozesses kann sich über die Länge in Vorschubrichtung des Bandes z.B. die Konzentration der Titan- und/oder Zirkonverbindungen in dem Polymer ändern. In der Richtung senkrecht zu der Vorschubrichtung kann man dagegen von gleichen Verhältnissen ausgehen.

Die Titan- und/oder Zirkonbelegungen werden z.B. mit der Methode der Röntgenfluoreszenz als zweitem Messverfahren quantitativ gemessen, die jedoch nicht in der Lage ist, schnell über das bewegte Blech zu scannen. Alternativ kann eine kalibrierbare Messung mit dem zweiten Messverfahren auch nach dem Verfahren der Laserinduzierten Plasmaspektroskopie (englisch: Laser-Induced Breakdown Spectroscopy, LIBS) erfolgen. Hierbei wird durch Beschuss der Oberfläche mit einem intensiven Laser-Impuls ein sehr kleiner Bereich der Oberfläche aus dem Material herausgeschlagen und in ein sogenanntes Plasma überführt, das aus ionisierten Atomen besteht. Die Rekombination der Atome erzeugt ein charakteristisches Leuchten, dessen spektrale Signatur den Spektrallinien der vorhandenen Elemente entspricht. Auf diese Weise ist die Elementverteilung in der Oberfläche oder der Beschichtung der Oberfläche bestimmbar. Dieses Verfahren ist wegen der Entfernung von Material aus der Oberfläche aber nicht flächendeckend einsetzbar. Auch die Geschwindigkeit der Messung ist nicht ausreichend. Aber eine quantitative Kalibrierung auf die metallischen Anteile der Beschichtung ist möglich.

Auch in diesem Fall ist es daher vorteilhaft, eine dynamische Kalibrierung gemäß einer Ausführungsform des erfindungsgemäßen Verfahrens vorzunehmen, wobei der Fluoreszenz-Scan die schnelle flächendeckende Messung gemäß dem ersten Messverfahren und die Röntgenfluoreszenz oder die laserinduzierte Plasma-Spektroskopie die quantitative, aber nicht für die bildgebende Darstellung geeignete Messung gemäß dem zweiten Messverfahren darstellen.

Die oben genannte Aufgabe wird auch durch ein Verfahren zum Beschichten einer Oberfläche eines bandförmigen Materials gelöst mit den Schritten, Bereitstellen des bandförmigen Materials, Bewegen des bandförmigen Materials in einer Vorschubrichtung, Aufbringen der Beschichtung und Erfassen der Oberflächenbelegung der Beschichtung auf der Oberfläche des bandförmigen Materials mit einer Ausführungsform eines Verfahrens zum Erfassen einer Oberflächenbelegung einer Beschichtung auf einer Oberfläche, so wie sie zuvor in Varianten beschrieben wurden. Dabei bildet dann das bandförmige Material den bandförmigen Prüfling im Sinne der vorliegenden Anmeldung. Ferner wird die oben genannte Aufgabe auch durch eine Weiterbildung des eingangs genannten Systems zum Erfassen einer Oberflächenbelegung einer Beschichtung auf einer Oberfläche eines bandförmigen Prüflings gelöst, wobei das System eine zweite Messeinrichtung aufweist, die derart eingerichtet und angeordnet ist, dass an einem Ort in der Zeile mit einem von dem ersten Messverfahren verschiedenen zweiten Messverfahren ein Maß für die Oberflächenbelegung der Beschichtung erfassbar ist, wobei die Auswerteeinrichtung derart wirksam mit der zweiten Messeinrichtung verbunden ist, dass ein Messsignal von der zweiten Messeinrichtung verarbeitbar ist und wobei die Auswerteeinrichtung derart eingerichtet ist, dass die Bestimmung des Maßes für die Oberflächenbelegung der Beschichtung mit dem ersten Messverfahren auf Grundlage des durch das zweite Messverfahren erfassten Maßes für die Oberflächenbelegung der Beschichtung kalibrierbar ist, wobei die Kalibrierungsmessung mit dem zweiten Messverfahren an genau einem oder an einer Mehrzahl von Orten in der Zeile ausgeführt wird, wobei die Anzahl der Orte, an denen die Kalibrierungsmessung ausgeführt wird, kleiner ist als die Anzahl der Orte, an denen die Messung mit dem ersten Messverfahren ausgeführt wird.

Soweit im Folgenden Aspekte der Erfindung im Hinblick auf das System beschrieben werden, so gelten diese auch für das entsprechende Verfahren zum Erfassen einer Oberflächenbelegung einer Beschichtung auf einer Oberfläche eines bandförmigen Prüflings und umgekehrt. Soweit das Verfahren mit einem System gemäß dieser Erfindung ausgeführt wird, so weist diese die entsprechenden Einrichtungen hierfür auf. Insbesondere sind Ausführungsformen des Systems zum Ausführen von Ausführungsformen des Verfahrens geeignet.

Es versteht sich, dass die Auswerteeinrichtung in einer Ausführungsform ein Prozessor bzw. ein Rechner ist.

In einer weiteren Ausführungsform der Erfindung umfasst das System eine Antriebseinrichtung zum Bewegen des bandförmigen Prüflings in der Vorschubrichtung.

Darüber hinaus wird die oben genannte Aufgabe auch von einer Beschichtungsanlage zum Beschichten einer Oberfläche eines bandförmigen Materials mit einer Auftragseinrichtung zum Aufbringen der Beschichtung auf die Oberfläche und in Vorschubrichtung nach der Auftragseinrichtung mit einem System zum Erfassen der Oberflächenbelegung der Beschichtung auf dem bandförmigen Material, so wie sie zuvor in Ausführungsformen davon beschrieben wurde, gelöst.

Weitere Vorteile, Merkmale und Anwendungsmöglichkeiten der vorliegenden Erfindung werden anhand der folgenden Beschreibung einer Ausführungsform und der dazugehörigen Figuren deutlich.

Figur 1 ist eine schematische Seitenansicht einer Ausführungsform einer Beschichtungsanlage mit einem System zum Erfassen der Dicke der Beschichtung.

Figur 2 ist eine schematische isometrische Ansicht des Systems zum Erfassen der Dicke der Beschichtung aus Figur 1.

Figur 3 ist eine schematische Draufsicht auf die Beschichtungsanlage aus Figur 1.

In den Figuren sind identische Elemente mit identischen Bezugszeichen bezeichnet.

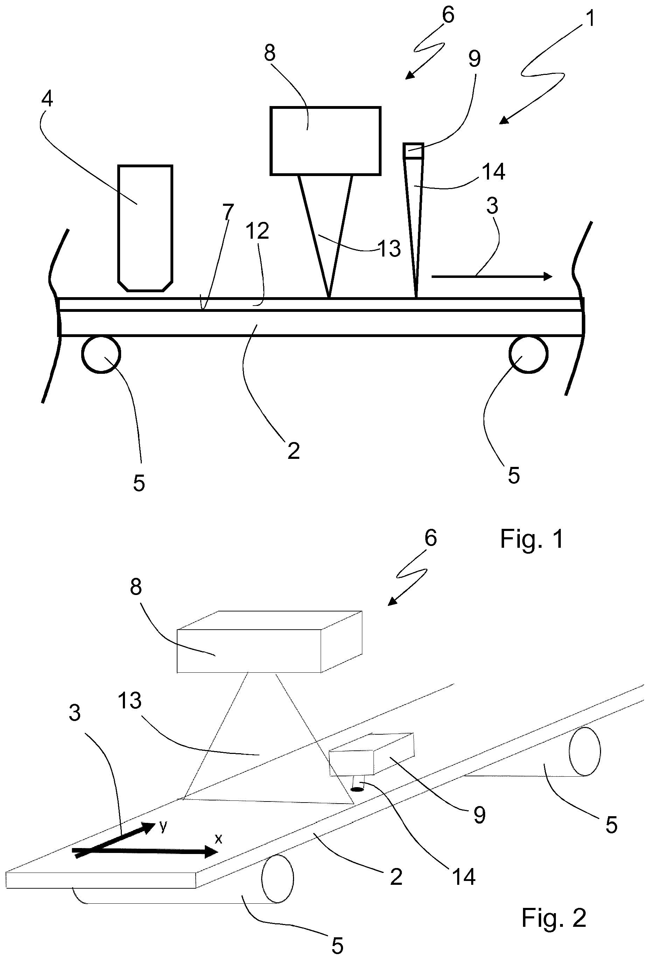

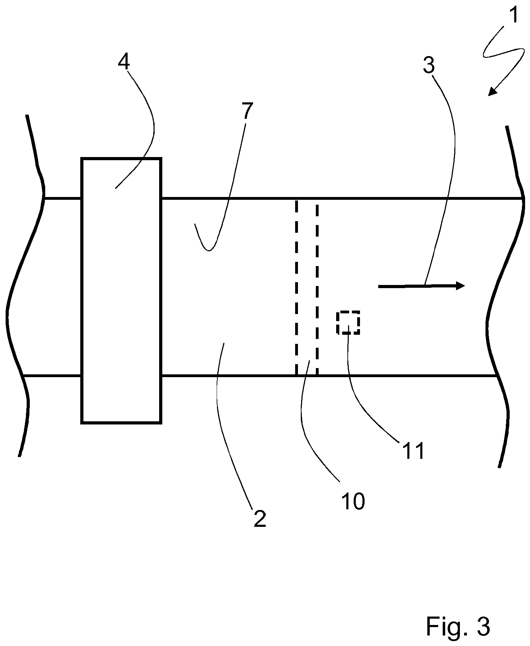

Die Beschichtungsanlage 1 aus den Figuren 1 bis 3 dient dazu, die Oberfläche 7 eines Blechbands 2 mit einer 1 μm dicken Beölung aus einem Umformöl zu beschichten, so dass das Blechband durch Pressen zu Karosserieteilen weiterverarbeitet werden kann. Das Stahlblechband 2 wird als Coil angeliefert und dann der Beschichtungsanlage 1 zugeführt. Dabei wird das Coil abgewickelt und das Blechband 2 mit hoher Geschwindigkeit in Vorschubrichtung 3 durch die Anlage 1 bewegt. Die Auftragseinrichtung 4 bringt die Beschichtung 12 auf die Oberfläche 7 des Blechbands 2 auf.

Das Blechband 2 wird mit Hilfe von Walzenförderern 5 bewegt.

Es gilt nun mit Hilfe eines Messsystems 6 sicherzustellen, dass die Oberfläche 7 des Blechbands 2 vollständig und gleichmäßig mit dem Umformöl beschichtet ist. Im vorliegenden Beispiel wird die über einige cm² gemittelte Dicke des aufgebrachten Umformöls als Maß für die Oberflächenbelegung mit dem Umformöl betrachtet. Dazu gilt es ein Bild der Oberflächenbeschichtung aufzunehmen, welches die mittlere Schichtdicke des Umformöls möglichst vollständig, d.h. an allen Orten, auf der Oberfläche 7 des Blechbands 2 abbildet. Das Messsystem 6 besteht aus zwei Teilen, nämlich einem UV-Fluoreszenz-Laserscanner 8 als erster Messeinrichtung zum Ausführen eines ersten Messverfahrens im Sinne der vorliegenden Anmeldung und einem Infrarot-Absorptionssensor 9 als zweiter Messeinrichtung zum Ausführen eines zweiten Messverfahrens im Sinne der vorliegenden Anmeldung.

Der Fluoreszenz-Laserscanner 8 ist in der Lage, eine Zeile 10 auf der Oberfläche 7 des Blechbandes sehr schnell zu erfassen. Durch die Vorschubbewegung des Blechbandes 2 in Vorschubrichtung 3 wird ein vollständiges Bild der Oberfläche bzw. der Beschichtung auf der Oberfläche 7 Zeile für Zeile generiert. In der dargestellten Ausführungsform ist der Fluoreszenz-Laserscanner ein abtastendes System, welches ultraviolette Strahlung mit Hilfe eines Lasers generiert und mit Hilfe einer Beleuchtungseinrichtung auf die Oberfläche 7 des Blechbands 2 lenkt, wobei jeweils nur ein Ort bzw. ein Punkt in der Zeile 10 beleuchtet wird. Die einzelnen Orte auf der Zeile 10 werden dann seriell, d.h. zeitlich nacheinander, von dem beleuchtenden Laserstrahl abgetastet und die durch die Beleuchtung und den Absorptionsprozess in dem Umformöl erzeugte Lumineszenzstrahlung mit unter Verwendung von wellenlängenselektiven Filtern, z.B. Interferenzfiltern, oder eines Spektrometers wellenlängenabhängig aufgenommen.

Ist bekannt, welches Umformöl bzw. welche Zusammensetzung des Umformöls zur Beschichtung verwendet wird, so ist die Messung mit Hilfe des Fluoreszenz-Laserscanners 8 für die Dicke quantitativ. Ändert sich allerdings die Zusammensetzung des Materials, so kann die Dicke nicht mehr quantitativ erfasst werden. Daher weist das Messsystem 6 zusätzlich den Infrarot-Absorptionssensor 9 auf. Dieser erfasst die Oberfläche 7 des Blechbands 2 bzw. die darauf aufgebrachte Beschichtung nur an einem einzigen Ort 11 in der Zeile 10. Die Messung mit Hilfe des Infrarot-Absorptionssensors 11 ermöglicht eine quantitative Dickenbestimmung auch dann, wenn das Material der Beschichtung nicht bekannt ist. Die Messung mithilfe des Infrarot-Absorptionssensors 9 erlaubt daher eine Kalibrierung der Messung mit Hilfe des Fluoreszenz-Laserscanners.

Da sich die Materialzusammensetzung der Beschichtung nur in der Vorschubrichtung 3 ändert, nicht aber in einer Richtung senkrecht dazu (der Auftrag erfolgt bezüglich der Materialzusammensetzung - nicht immer bezüglich der Dicke - gleichmäßig über die gesamte Breite hinweg) genügt es, wenn die Messung mit Hilfe des Infrarot-Absorptionssensors 9 an genau einem einzigen Ort 11 in der Zeile 10 erfolgt. Auf diese Weise wird ein Messsystem bereitgestellt, welches auch dann quantitativ die Dicke der Beschichtung bestimmt, wenn sich die Zusammensetzung der Beschichtung ändert.

Dabei ist es nicht erforderlich, dass die beiden Messsysteme in Vorschubrichtung an derselben Position stehen. Bei einer versetzten Anordnung muss der zeitliche Versatz der Messungen der beiden Sensoren an derselben Position auf dem Band bei der Auswertung berücksichtigt werden.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann ergeben, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

**Bezugszeichenliste**

| 1 | Beschichtungsanlage |
|----|----|
| 2 | Blechband / Prüfling |
| 3 | Vorschubrichtung |
| 4 | Auftragseinrichtung |
| 5 | Walzenförderer |
| 6 | Messsystem |
| 7 | Oberfläche |
| 8 | Fluoreszenz-Laserscanner |
| 9 | Röntgenfluoreszenzsensor |
| 10 | Zeile |
| 11 | Ort |
| 12 | Beschichtung |
| 13 | Laserstrahlung des Fluoreszenz-Laserscanners 8 |
| 14 | Strahlung des Röntgenfluoreszenzsensors 9 |

**Patentansprüche**

1. Verfahren zum Erfassen der Oberflächenbelegung einer Beschichtung (12) auf einer Oberfläche (7) eines bandförmigen Prüflings (2) mit den Schritten

    Bewegen des bandförmigen Prüflings (2) in einer Vorschubrichtung (3), zeilenweises Erfassen eines Maßes für die Oberflächenbelegung der Beschichtung (12) mit einem ersten Messverfahren, welches die Schritte umfasst

    Beleuchten der Oberfläche (7) des Prüflings (2) mit elektromagnetischer Strahlung (13) an einer Mehrzahl von Orten in einer sich im Wesentlichen senkrecht zu der Vorschubrichtung (3) erstreckenden Zeile (10), Messen jeweils einer Intensität einer von der Beschichtung (12) an den Orten in der Zeile (10) reflektierten, zurückgestreuten oder abgestrahlten elektromagnetischen Strahlung mit einem Detektor und Bestimmen eines Maßes für die Oberflächenbelegung der Beschichtung (12) an den Orten in der Zeile (10) aus der von dem Detektor erfassten Intensität,

    Ausführen einer Kalibrierungsmessung an einem Ort (11) der Zeile (10) mit einem von dem ersten Messverfahren verschiedenen zweiten Messverfahren, wobei das zweite Messverfahren derart ausgestaltet ist, dass es ein Maß für eine Oberflächenbelegung der Beschichtung (12) an dem Ort in der Zeile erfasst, und Kalibrieren des durch das erste Messverfahren bestimmten Maßes für die Oberflächenbelegung der Beschichtung (12) auf der Grundlage des von dem zweiten Messverfahren erfassten Maßes für die Oberflächenbelegung der Beschichtung (12),
wobei die Kalibrierungsmessung mit dem zweiten Messverfahren an genau einem oder an einer Mehrzahl von Orten (11) in der Zeile (10) ausgeführt wird, wobei die Anzahl der Orte (11), an denen die Kalibrierungsmessung ausgeführt wird, kleiner ist als die Anzahl der Orte, an denen die Messung mit dem ersten Messverfahren ausgeführt wird.

2. Verfahren nach dem vorhergehenden Anspruch, **dadurch gekennzeichnet, dass** das zweite Messverfahren eine Infrarot-Absorptionsmessung, eine Röntgenfluoreszenzmessung oder eine laserinduzierte Plasmaspektroskopiemessung ist.

3. Verfahren nach einem der vorhergehenden Ansprüche, **dadurch gekennzeichnet, dass** mit dem ersten Messverfahren jeweils die Intensität in Abhängigkeit von der Wellenlänge einer von der Beschichtung (12) an den Orten in der Zeile (10) abgestrahlten Lumineszenzstrahlung mit dem Detektor gemessen wird und das Maß für die Oberflächenbelegung der Beschichtung (12) an den Orten in der Zeile (10) aus der von dem Detektor erfassten Intensität in Abhängigkeit von der Wellenlänge bestimmt wird.

4. Verfahren nach dem vorhergehenden Anspruch, **dadurch gekennzeichnet, dass** die elektromagnetische Strahlung (13) mit der die Oberfläche (7) des Prüflings (2) in dem ersten Messverfahren beleuchtet wird, eine Wellenlänge in einem Bereich von 250 nm bis 500 nm aufweist.

5. Verfahren nach einem der vorhergehenden Ansprüche, **dadurch gekennzeichnet, dass** das erste Messverfahren ein Abtastverfahren ist, wobei zeitlich nacheinander die Mehrzahl von Orten in der Zeile (10) beleuchtet und die Intensität der elektromagnetischen Strahlung von diesen Orten gemessen wird.

6. Verfahren nach einem der vorhergehenden Ansprüche, **dadurch gekennzeichnet, dass** mit dem ersten Messverfahren pro Zeiteinheit eine größere Anzahl von Messungen durchgeführt wird als mit dem zweiten Messverfahren, wobei aus der Kombination des ersten und des zweiten Messverfahrens eine räumliche Verteilung der absoluten Oberflächenbelegung der Beschichtung (12) auf der Oberfläche (7) des Prüflings (2) bestimmbar ist, indem mit dem ersten Messverfahren jeweils ein relatives Maß für die Oberflächenbelegung der Beschichtung (12) an einer ersten Anzahl von Orten auf der Oberfläche (7) des Prüflings (2) bestimmt wird, während mit dem zweiten Messverfahren jeweils die absolute Oberflächenbelegung der Beschichtung (12) an einer zweiten Anzahl von Orten auf der Oberfläche (7) des Prüflings (2) erfasst wird, wobei die erste Anzahl größer ist als die zweite Anzahl.

7. Verfahren nach einem der vorhergehenden Ansprüche, **dadurch gekennzeichnet, dass** aus der mit dem ersten Messverfahren gemessenen Intensität und dem mit dem zweiten Messverfahren erfassten Maß für die Oberflächenbelegung der Beschichtung (12) eine Information über die Zusammensetzung der Beschichtung (12) an den mit dem ersten Messverfahren gemessenen Orten abgeleitet wird.

8. Verfahren nach einem der vorhergehenden Ansprüche, **dadurch gekennzeichnet, dass** der bandförmige Prüfling (2) ein Blechband aus Metall, vorzugsweise aus Stahl oder Aluminium ist.

9. Verfahren nach einem der vorhergehenden Ansprüche, **dadurch gekennzeichnet, dass** die Beschichtung (12) ein Umformöl ist.

10. Verfahren nach einem der vorhergehenden Ansprüche, **dadurch gekennzeichnet, dass** die Beschichtung (12) eine Korrosionsschutzbeschichtung, vorzugsweise auf einem Blechband (2) aus Aluminium als Prüfling ist.

11. Verfahren nach dem vorhergehenden Anspruch, **dadurch gekennzeichnet, dass** die Korrosionsschutzbeschichtung Zirkon und ein Polymer aufweist.

12. Verfahren zum Beschichten einer Oberfläche (7) eines bandförmigen Materials (2) mit den Schritten

Bereitstellen des bandförmigen Materials (2), Bewegen des bandförmigen Materials (2) in einer Vorschubrichtung (3), Aufbringen der Beschichtung (12) und
Erfassen der Oberflächenbelegung der Beschichtung (12) auf dem bandförmigen Material (2) mit dem Verfahren nach einem der vorhergehenden Ansprüche.

13. System (6) zum Erfassen der Oberflächenbelegung einer Beschichtung (12) auf einer Oberfläche (7) eines bandförmigen Prüflings (2) mit

einer ersten Messeinrichtung (8) zum Erfassen eines Maßes für die Oberflächenbelegung der Beschichtung (12) mit einem ersten Messverfahren, wobei die Messeinrichtung (8) umfasst

eine Lichtquelle zum Erzeugen von elektromagnetischer Strahlung (13), eine Beleuchtungseinrichtung, die derart eingerichtet und angeordnet ist, dass mit der Beleuchtungseinrichtung die Oberfläche (7) des Prüflings (2) mit der elektromagnetischen Strahlung in Form einer sich im Wesentlichen senkrecht zu einer Vorschubrichtung (3) des Prüflings (2) erstreckenden Zeile (10) beleuchtbar ist, und

einen Detektor, der so eingerichtet und angeordnet ist, dass mit dem Detektor eine Intensität einer von der Beschichtung an den Orten in der Zeile (10) reflektierten, zurückgestreuten oder abgestrahlten elektromagnetischen Strahlung messbar ist, und

einer Auswerteeinrichtung, wobei die Auswerteeinrichtung derart wirksam mit dem Detektor verbunden ist, dass ein Messsignal von dem Detektor mit der Auswerteeinrichtung auswertbar ist, und wobei die Auswerteeinrichtung derart eingerichtet ist, dass mit der Auswerteeinrichtung ein Maß für die Oberflächenbelegung der Beschichtung (12) an den Orten in der Zeile (10) aus der gemessenen Intensität der elektromagnetischen Strahlung bestimmbar ist, wobei das System darüber hinaus eine zweite Messeinrichtung (9) aufweist, wobei die zweite Messeinrichtung (9) derart eingerichtet und angeordnet ist, dass an einem Ort (11) in der Zeile (10) mit einem von dem ersten Messverfahren verschiedenen zweiten Messverfahren ein Maß für die Oberflächenbelegung der Beschichtung (12) erfassbar ist, wobei die Auswerteeinrichtung derart wirksam mit der zweiten Messeinrichtung (9) verbunden ist, dass ein Messsignal von der zweiten Messeinrichtung (9) verarbeitbar ist, wobei die Auswerteeinrichtung derart eingerichtet ist, dass die Bestimmung des Maßes für die Oberflächenbelegung der Beschichtung (12) mit dem ersten Messverfahren auf Grundlage des mit dem zweiten Messverfahren an dem Ort in der Zeile erfassten Maßes für die Oberflächenbelegung der Beschichtung (12) kalibrierbar ist, und wobei die Kalibrierungsmessung mit dem zweiten Messverfahren an genau einem oder an einer Mehrzahl von Orten (11) in der Zeile (10) ausgeführt wird, wobei die Anzahl der Orte (11), an denen die Kalibrierungsmessung ausgeführt wird, kleiner ist als die Anzahl der Orte, an denen die Messung mit dem ersten Messverfahren ausgeführt wird.

14. System (6) nach dem vorhergehenden Anspruch, **dadurch gekennzeichnet, dass** das System einen Antrieb (5) zum Bewegen des bandförmigen Prüflings (2) relativ zu der Beleuchtungseinrichtung in der Vorschubrichtung (3) aufweist.

15. Beschichtungsanlage (1) zum Beschichten einer Oberfläche (7) eines bandförmigen Materials (2) mit

einer Auftragseinrichtung (4) zum Aufbringen der Beschichtung (12) auf die Oberfläche (7) und
in Vorschubrichtung (3) nach der Auftragseinrichtung (4) einem System (6) nach einem der Ansprüche 13 oder 14.

## Claims

1. A method for detecting the surface allocation of a coating (12) on a surface (7) of a strip-shaped test piece (2), with the steps of:

moving the strip-shaped test piece (2) in a feed direction (3),
detecting a parameter of the surface allocation of the coating (12) line by line using a first measuring procedure which comprises the steps of:

illuminating the surface (7) of the test piece (2) with electromagnetic radiation (13) at a plurality of locations in a line (10) extending substantially perpendicular to the feed direction (3), measuring, using a detector, a respective intensity of electromagnetic radiation reflected, backscattered or emitted from the coating (12) at the locations in the line (10), and
determining a parameter for the surface allocation of the coating (12) at the locations in the line (10) from the intensity detected by the detector,

carrying out a calibration measurement at a location (11) of the line (10) with a second measuring procedure which is different from the first measuring procedure, wherein the second measuring procedure is configured in a manner such that it detects a parameter for a surface allocation of the coating (12) at the location in the line, and
calibrating the parameter for the surface allocation of the coating (12) determined by means of the first measuring procedure on the basis of the parameter for the surface allocation of the coating (12) detected by the second measuring procedure,
wherein the calibration measurement is carried out using the second measuring procedure at precisely one or at a plurality of locations (11) in the line (10), wherein the number of locations (11) at which the calibration measurement is carried out is smaller than the number of locations at which the measurement using the first measuring procedure is carried out.

2. The method according to the preceding claim, **characterized in that** the second measuring procedure is a measurement using infrared absorption, X-ray fluorescence or laser-induced breakdown spectroscopy.

3. The method according to one of the preceding claims, **characterized in that** with the first measuring procedure, in each case the intensity is measured with the detector as a function of the wavelength of luminescence radiation emitted from the coating (12) at the locations in the line (10) and the parameter for the surface allocation of the coating (12) is determined at the locations in the line (10) from the intensity detected by the detector as a function of the wavelength.

4. The method according to the preceding claim, **characterized in that** the electromagnetic radiation (13) with which the surface (7) of the test piece (2) is illuminated in the first measuring procedure has a wavelength in the range from 250 nm to 500 nm.

5. The method according to one of the preceding claims, **characterized in that** the first measuring procedure is a scanning method, wherein the plurality of locations in the line (10) are illuminated one after the other and the intensity of the electromagnetic radiation from these locations is measured.

6. The method according to one of the preceding claims, **characterized in that** with the first measuring procedure, a larger number of measurements is carried out per unit time than with the second measuring procedure, wherein from the combination of the first and the second measuring procedures, a spatial distribution of the absolute surface allocation of the coating (12) on the surface (7) of the test piece (2) can be determined, in which with the first measuring procedure, a respective relative parameter for the surface allocation of the coating (12) is determined at a first number of locations on the surface (7) of the test piece (2), while with the second measuring procedure, the respective absolute surface allocation of the coating (12) is detected at a second number of locations on the surface (7) of the test piece (2), wherein the first number is larger than the second number.

7. The method according to one of the preceding claims, **characterized in that** from the intensity measured with the first measuring procedure and from the parameter for the surface allocation of the coating (12) detected with the second measuring procedure, information is derived regarding the composition of the coating (12) at the locations measured using the first measuring procedure.

8. The method according to one of the preceding claims, **characterized in that** the strip-shaped test piece (2) is a sheet metal strip produced from metal, preferably from steel or aluminium.

9. The method according to one of the preceding claims, **characterized in that** the coating (12) is a forming oil.

10. The method according to one of the preceding claims, **characterized in that** the coating (12) is an anti-corrosion coating, preferably on a sheet metal strip (2) produced from aluminium as the test piece.

11. The method according to the preceding claim, **characterized in that** the corrosion protection coating is zirconium and a polymer.

12. A method for coating a surface (7) of a strip-shaped material (2), with the steps of:

providing a strip-shaped material (2),
moving the strip-shaped material (2) in a feed direction (3),
applying the coating (12), and
detecting the surface allocation of the coating (12) on the strip-shaped material (2) with the method according to one of the preceding claims.

13. A system (6) for detecting the surface allocation of a coating (12) on a surface (7) of a strip-shaped test piece (2), having:

a first measuring device (8) for detecting a parameter for the surface allocation of the coating (12) using a first measuring procedure, wherein the measuring device (8) comprises:

a source of light for producing electromagnetic radiation (13),
an illuminating device which is configured and disposed such that with the illuminating device, the surface (7) of the test piece (2) can be illuminated with the electromagnetic radiation in the form of a line 10) extending substantially perpendicular to a feed direction (3) of the test piece (2), and
a detector which is configured and disposed such that with the detector, an intensity of electromagnetic radiation reflected, backscattered or emitted from the coating at the locations in the line (10) can be measured, and

a processing unit, wherein the processing unit is operatively connected with the detector in a manner such that a measuring signal from the detector can be processed using the processing unit, and

wherein the processing unit is configured in a manner such that with the processing unit, a parameter for the surface allocation of the coating (12) at the locations in the line (10) can be determined from the measured intensity of the electromagnetic radiation,

wherein the system furthermore has a second measuring device (9),

wherein the second measuring device (9) is configured and disposed such that at a location (11) in the line (10), a parameter for the surface allocation of the coating (12) can be detected with a second measuring procedure which is different from the first measuring procedure,

wherein the processing unit is operatively connected with the second measuring procedure (9) in a manner such that a measuring signal from the second measuring device (9) can be processed, wherein the processing unit is configured in a manner such that the determination of the parameter for the surface allocation of the coating (12) can be calibrated with the first measuring procedure on the basis of the parameter for the surface allocation of the coating (12) detected with the second measuring procedure at the location in the line, and

wherein the calibration measurement is carried out with the second measuring procedure at precisely one or at a plurality of locations (11) in the line (10), wherein the number of locations (11) at which the calibration measurement is carried out is smaller than the number of locations at which the measurement with the first measuring procedure is carried out.

14. The system (6) according to the preceding claim, **characterized in that** the system has a drive (5) for moving the strip-shaped test piece (2) relative to the illuminating device in the feed direction (3).

15. A coating unit (1) for coating a surface (7) of a strip-shaped material (2), having:

an application device (4) for applying the coating (12) to the surface (7), and a system (6) according to one of claims 13 or 14 downstream of the application device (4) in the feed direction (3).

## Revendications

1. Procédé d'enregistrement du recouvrement superficiel d'un revêtement (12) sur une surface (7) d'un échantillon en forme de bande (2), comprenant les étapes consistant à

déplacer l'échantillon en forme de bande (2) dans une direction d'avancée (3),

enregistrer ligne par ligne une dimension caractérisant le recouvrement superficiel du revêtement (12) avec un premier procédé de mesure comprenant les étapes consistant à

éclairer la surface (7) de l'échantillon (2) avec un rayonnement électromagnétique (13) à une pluralité d'emplacements sur une ligne (10) s'étendant essentiellement de manière perpendiculaire à la direction d'avancée (3),

mesurer avec un détecteur respectivement une intensité d'un rayonnement électromagnétique réfléchi, rétrodiffusé ou rayonné par le revêtement (12) aux emplacements sur la ligne (10) et déterminer, à partir de l'intensité enregistrée par le détecteur, une dimension caractérisant le recouvrement superficiel du revêtement (12) aux emplacements sur la ligne (10),

mettre en œuvre une mesure d'étalonnage à un emplacement (11) de la ligne (10) en utilisant un second procédé de mesure différent du premier procédé de mesure, le second procédé de mesure étant conçu pour enregistrer une dimension pour un recouvrement superficiel du revêtement (12) à l'emplacement sur la ligne, et

étalonner la dimension caractérisant le recouvrement superficiel du revêtement (12) déterminée grâce au premier procédé de mesure en se basant sur la dimension caractérisant le recouvrement superficiel du revêtement (12) enregistrée par le second procédé de mesure,

la mesure d'étalonnage étant mise en œuvre avec le second procédé de mesure à exactement un emplacement ou à une pluralité d'emplacements (11) sur la ligne (10), le nombre d'emplacements (11) auxquels la mesure d'étalonnage est mise en œuvre, étant inférieure au nombre d'emplacements auxquels la mesure est mise en œuvre avec le premier procédé de mesure.

2. Procédé selon la revendication précédente, **caractérisé en ce que** le second procédé de mesure est une mesure d'absorption de l'infrarouge, une mesure de fluorescence X ou une mesure par spectroscopie sur plasma induit par laser.

3. Procédé selon l'une quelconque des revendications précédentes, **caractérisé en ce que**, avec le premier procédé de mesure, l'intensité est respectivement mesurée avec le détecteur en fonction de la longueur d'onde d'un rayonnement de luminescence émis par le revêtement (12) aux emplacements sur la ligne (10), et la dimension caractérisant le recouvrement superficiel du revêtement (12) aux emplacements sur la ligne (10) est déterminée en fonction de la longueur d'onde à partir de l'intensité enregistrée par le détecteur.

4. Procédé selon la revendication précédente, **caractérisé en ce que** le rayonnement électromagnétique (13) avec lequel la surface (7) de l'échantillon (2) est éclairée dans le premier procédé de mesure présente une longueur d'onde située dans une plage comprise entre 250 nm et 500 nm.

5. Procédé selon l'une quelconque des revendications précédentes, **caractérisé en ce que** le premier procédé de mesure est un procédé de balayage, dans lequel la pluralité d'emplacements sur la ligne (10) sont éclairés les uns après les autres et l'intensité du rayonnement électromagnétique desdits emplacements est mesurée.

6. Procédé selon l'une quelconque des revendications précédentes, **caractérisé en ce que**, avec le premier procédé de mesure, un nombre de mesures par unité de temps supérieur à celui obtenu avec le second procédé de mesure est mis en œuvre, une répartition spatiale du recouvrement superficiel absolu du revêtement (12) pouvant être déterminée sur la surface (7) de l'échantillon (2) à partir d'une combinaison des premier et second procédés de mesure en utilisant le premier procédé de mesure pour déterminer respectivement une dimension relative caractérisant le recouvrement superficiel du revêtement (12) à un premier nombre d'emplacements sur la surface (7) de l'échantillon (2), tandis que le recouvrement superficiel absolu du revêtement (12) est respectivement enregistré avec le second procédé de mesure à un second nombre d'emplacements sur la surface (7) de l'échantillon (2), le premier nombre étant supérieur au second nombre.

7. Procédé selon l'une quelconque des revendications précédentes, **caractérisé en ce que** des informations sur la composition du revêtement (12) à des emplacements mesurés avec le premier procédé de mesure sont inférées à partir de l'intensité mesurée avec le premier procédé de mesure et de la dimension caractérisant le recouvrement superficiel du revêtement (12) enregistrée avec le second procédé de mesure.

8. Procédé selon l'une quelconque des revendications précédentes, **caractérisé en ce que** l'échantillon en forme de bande (2) est une bande de tôle en métal, de manière préférée en acier ou en aluminium.

9. Procédé selon l'une quelconque des revendications précédentes, **caractérisé en ce que** le revêtement (12) est une huile de formage.

10. Procédé selon l'une quelconque des revendications précédentes, **caractérisé en ce que** le revêtement (12) est un revêtement anticorrosion, de manière préférée sur une bande de tôle (2) en aluminium tenant lieu d'échantillon.

11. Procédé selon la revendication précédente, **caractérisé en ce que** le revêtement anticorrosion comprend du zirconium et un polymère.

12. Procédé de revêtement d'une surface (7) d'un matériau en forme de bande (2), comprenant les étapes consistant à
fournir le matériau en forme de bande (2),
déplacer le matériau en forme de bande (2) dans une direction d'avancée (3),
appliquer le revêtement (12) et
enregistrer le recouvrement superficiel du revêtement (12) sur le matériau en forme de bande (2) avec le procédé selon l'une quelconque des revendications précédentes.

13. Système (6) permettant d'enregistrer le recouvrement superficiel d'un revêtement (12) sur une surface (7) d'un échantillon en forme de bande (2), avec un premier dispositif de mesure (8) permettant d'enregistrer une dimension caractérisant le recouvrement superficiel du revêtement (12) avec un premier procédé de mesure, le dispositif de mesure (8) comprenant

une source de lumière permettant de générer un rayonnement électromagnétique (13),
un dispositif d'éclairage conçu et agencé de telle manière que, grâce au dispositif d'éclairage, la surface (7) de l'échantillon (2) peut être éclairée avec le rayonnement électromagnétique sous la forme d'une ligne (10) s'étendant de manière essentiellement perpendiculaire à une direction d'avancée (3) de l'échantillon (2), et
un détecteur conçu et agencé de sorte qu'une intensité d'un rayonnement électromagnétique réfléchi, rétrodiffusé ou rayonné par le revêtement aux emplacements sur la ligne (10) puisse être mesurée, et

un dispositif d'évaluation, le dispositif d'évaluation étant relié de manière fonctionnelle au détecteur de telle manière qu'un signal de mesure en provenance du détecteur puisse être évalué avec le dispositif d'évaluation, et le dispositif d'évaluation étant conçu de telle manière qu'une dimension caractérisant le recouvrement superficiel du revêtement (12) aux emplacements sur la ligne (10) puisse être déterminée avec le dispositif d'évaluation à partir de l'intensité mesurée du rayonnement électromagnétique,

le système présentant en outre un second dispositif de mesure (9), le second dispositif de mesure (9) étant conçu et agencé de telle manière qu'une dimension caractérisant le recouvrement superficiel du revêtement (12) puisse être enregistrée à un emplacement (11) sur la ligne (10) avec un second procédé de mesure différent du premier procédé de mesure,

le dispositif d'évaluation étant relié de manière fonctionnelle au second dispositif de mesure (9) de telle manière qu'un signal de mesure puisse être traité par le second dispositif de mesure (9),

le dispositif d'évaluation étant conçu de telle manière que la détermination de la dimension caractérisant le recouvrement superficiel du revêtement (12) avec le premier procédé de mesure puisse être étalonnée en se basant sur la dimension pour le degré de recouvrement superficiel du revêtement (12) enregistrée avec le second procédé de mesure à l'emplacement sur la ligne, et

la mesure d'étalonnage étant mise en œuvre avec le second procédé de mesure à exactement un emplacement ou à une pluralité d'emplacements (11) sur la ligne (10), le nombre d'emplacements (11) auxquels la mesure d'étalonnage est mise en œuvre étant inférieure au nombre des emplacements auxquels la mesure est mise en œuvre avec le premier procédé de mesure.

**14.** Système (6) selon la revendication précédente, **caractérisé en ce que** le système présente un entraînement (5) permettant de déplacer l'échantillon en forme de bande (2) dans la direction d'avancée (3) par rapport au dispositif d'éclairage.

**15.** Installation de revêtement (1) permettant de revêtir une surface (7) d'un matériau en forme de bande (2), avec

un dispositif d'application (4) permettant d'appliquer le revêtement (12) sur la surface (7) et

en aval du dispositif d'application (4) dans la direction d'avancée (3), un système (6) selon l'une des revendications 13 ou 14.

Fig. 1

Fig. 2

Fig. 3

**IN DER BESCHREIBUNG AUFGEFÜHRTE DOKUMENTE**

**In der Beschreibung aufgeführte Patentdokumente**

- DE 102015007054 A1